# EUROPÄISCHE PATENTANMELDUNG

(11) **EP 4 273 773 A2**
(43) Veröffentlichungstag der Anmeldung: **08.11.2023**
(21) Anmeldenummer: 23186494.3
(22) Anmeldetag: 26.06.2014
(51) Int. Cl.: G06Q 10/10

(54) **PLATTFORM-VORRICHTUNG FÜR AKTIV VERBREITETES QUANTITATIVES SCHWARM-WISSEN**

(30) Priorität: 28.11.2013 WO PCT/DE2013/100399
(62) Teilanmeldung aus: 14754995.0
(71) Anmelder: Faulwetter, Patrick, Marina del Rey, CA 90292 (US)
(72) Erfinder: Kersting, Björn, 35619 Braunfels (DE)
(74) Vertreter: Kiessling, Christian

(57) **Zusammenfassung**

Bei einer mit einer Mehrzahl mittels einer Kennung identifizierbarer Nutzer-Teilnehmer vernetzbare webplatzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, wird aktiv eine automatisierte Distribution von Seiten der Nutzer-Teilnehmer gesammelter Information im Wesentlichen dadurch ermöglicht, dass die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist.

## Beschreibung

Die vorliegende Erfindung betrifft eine mit einer Mehrzahl mittels einer Kennung identifizierbarer Nutzer-Teilnehmer vernetzbare web-platzierte Plattform-Vorrichtung zum Sammeln und Bearbeiten von in jeweils mittels einer vorgebbaren Kodierung identifizierbaren, einer Mehrzahl unterschiedlicher Themen zugeordneten Speicherplätzen einer Plattform gespeicherten Informationen seitens der Nutzer-Teilnehmer.

Plattform-Vorrichtungen der eingangs genannten Art sind im Stand der Technik für eine Vielzahl von Anwendungen bekannt. Unter anderem werden sie auch im weltweiten Internet betrieben. Die bekannten Plattform-Vorrichtungen weisen indes den Nachteil auf, dass eine spezielle Auswahl vorgebbarer Verknüpfungen, und dabei nach vorgebbaren Kriterien durchführbare Verknüpfungen nicht realisierbar sind. Die Ursache dafür ist zum einen darin zu sehen, dass die derzeitigen Plattformen Informationen speichern, ohne dass diesen Informationen streng vorgebbare Bearbeitungskriterien und streng vorgebbare Evaluierungskriterien beigemessen werden.

Zum anderen sind die bekannten Plattform-Vorrichtungen nicht effektiv in der Verbreitung von Schwarmwissen.

Aufgabe der Erfindung ist es deshalb, eine Plattform-Vorrichtung zu schaffen, mittels derer in einem ersten Speicher gespeicherte Informationen nach streng vorgebbaren Bearbeitungskriterien seitens der Netz-Teilnehmer bewertbar und mit Zusätzen versehbar oder anderweitig änderbar ist und mittels derer eine effektive automatisierte Verbreitung insbesondere von eine quantitative Information darstellendem Schwarmwissen ermöglicht ist.

Für eine Plattform-Vorrichtung der eingangs genannten Art wird diese Aufgabe dadurch gelöst, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, wobei eine Identifizierungs-Einrichtung vorgesehen ist, um alle in einen vorgegebenen Speicherplatz Zusatz-Information einbringenden Nutzer-Teilnehmer anhand ihrer Kennung zu identifizieren und in einem Nutzer-Teilnehmer-Register zu speichern, um bei Eingabe einer jeweils neuen Zusatz-Information in den zweiten Speicherplatz seitens eines beliebigen identifizierten Nutzer-Teilnehmers mittels einer Aktivierungseinheit eine die neue Zusatz-Information enthaltende automatisierte Übermittlung (DuU-feed) mindestens eines Teils der betreffenden dualen Einheit an zumindest einen Teil der in dem Nutzer-Teilnehmer-Register gespeicherten anderen registrierten Nutzer-Teilnehmer mittels einer dafür vorgesehenen Sendeeinrichtung vorzunehmen.

Bevorzugte Ausführungsformen der Erfindung sind Gegenstand der Unteransprüche.

Bei der erfindungsgemäßen Plattform-Vorrichtung wird durch die Merkmalskombination, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, wobei eine Identifizierungs-Einrichtung vorgesehen ist, um alle in einen vorgegebenen Speicherplatz Zusatz-Information einbringenden Nutzer-Teilnehmer anhand ihrer Kennung zu identifizieren und in einem Nutzer-Teilnehmer-Register zu speichern, um bei Eingabe einer jeweils neuen Zusatz-Information in den zweiten Speicherplatz seitens eines beliebigen identifizierten Nutzer-Teilnehmers mittels einer Aktivierungseinheit eine die neue Zusatz-Information enthaltende aktiv automatisierte Übermittlung (DuU-feed) mindestens eines Teils der betreffenden dualen Einheit an zumindest einen Teil der in dem Nutzer-Teilnehmer-Register gespeicherten anderen registrierten Nutzer-Teilnehmer mittels einer dafür vorgesehenen Sendeeinrichtung vorzunehmen, erreicht, dass über eine Bildung dualer Einheiten Informationen, insbesondere solche, die eine quantitative Information darstellen, bezüglich sehr spezifischer Bearbeitungsvorgaben bearbeitbar, änderbar und dann speicherbar sind, wobei die in Form von Einzelbewertungen, Einzelergänzungen und Einzelkommentaren eingebrachten Informationen eine Form von Schwarmwissen bilden, das mittels streng vorgebbarer Kriterien aktiv per automatisierter Übermittlung (DuU-feed) an eine vorherbestimmbare Menge von Nutzer-Teilnehmern übermittelbar ist.

Ziel und Zweck eines von der Mehrzahl der Nutzer-Teilnehmer durchführbaren Bearbeitungsvorgangs ist es dabei zuförderst, eine von einem Initial-Autor unter einem ersten Speicherplatz einer dualen Einheit eingelesene Initial-Information seitens der Nutzer-Teilnehmer bewertbar und bearbeitbar zu machen, um die Initial-Information mit einer Verlässlichkeits-Benotung bzw. Verlässlichkeits-Bewertung zu versehen, die am Ende eines erfindungsgemäß durchgeführten Bearbeitungsvorgangs in den ersten Speicherplatz eingetragen ist und für die Allgemeinheit eine übersichtliche Schwarm-Bewertung seitens der Nutzer-Teilnehmer darstellt.

Gemäß einer ersten bevorzugten Ausführungsform der erfindungsgemäßen Vorrichtung ist vorgesehen, dass in dem editierbaren zweiten Speicherplatz Zusatz-Informationen in Form von Bewertungen der auf dem ersten Speicherplatz gespeicherten Informationen seitens der Nutzer-Teilnehmer vornehmbar sind, wobei eine Bewertung definiert ist als die Menge der von seitens der Nutzer-Teilnehmer vorgenommener vorherbestimmt definierter Eingaben in den zweiten Speicherplatz.

Eine die neue Zusatz-Information enthaltende Übermittlung (DuU-feed) kann dabei lediglich den Inhalt des ersten Speicherplatzes umfassen oder je nach Vorgabe alternativ den Inhalt eines ersten Speicherplatzes sowie den Inhalt des dem ersten Speicherplatz zugeordneten zweiten Speicherplatzes umfassen.

Des Weiteren kann vorgesehen sein, dass eine die neue Zusatz-Information enthaltende Übermittlung (DuU-feed) an alle in dem Nutzer-Teilnehmer-Register gespeicherten anderen registrierten Nutzer-Teilnehmer erfolgt. Alternativ können die Kennungen der identifizierten Nutzer-Teilnehmer geeignet ausgebildet sein, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden.

Als Kriterien für die Bildung von Untergruppen von Nutzer-Teilnehmern kommen Merkmale wie Alter, Geschlecht, regionale Ansiedlung, Häufung vorherbestimmter definierter Webaktivitäten, Neigungen und nachgewiesene Interessen usw. der einzelnen Nutzer-Teilnehmer in Betracht.

Eine Übermittlung (DuU-feed) an die Kennung eines identifizierten Nutzer-Teilnehmers erfolgt vorzugsweise anhand einer durch die Eingabe der jeweils weiteren Zusatz-Information aktivierten Sendeeinrichtung zum Schaffen eines Informations-Links an in dem Nutzer-Teilnehmer-Register gespeicherte andere registrierte Nutzer-Teilnehmer.

Gemäß einer wichtigen bevorzugten Ausführungsform der erfindungsgemäßen Vorrichtung ist vorgesehen, dass in dem editierbaren zweiten Speicherplatz Zusatz-Informationen in Form von individuellen Bewertungen der auf dem ersten Speicherplatz gespeicherten Informationen seitens der Nutzer-Teilnehmer vornehmbar sind, wobei mindestens eine Additions-Einrichtung zum Zählen der eingegebenen individuellen Bewertungen sowie ein Speicher in dem zweiten Speicherplatz zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die Anzahl von seitens der Nutzer-Teilnehmer vorgenommener vorherbestimmt definierter Eingaben in den zweiten Speicherplatz.

Dabei ist vorzugsweise eine erste Additions-Einrichtung zum Zählen der eingegebenen positiven individuellen Bewertungen sowie ein Speicher zum Speichern dieser Anzahl in dem zweiten Speicherplatz vorgesehen, und eine zweite Additions-Einrichtung zum Zählen der eingegebenen negativen individuellen Bewertungen sowie ein Speicher zum Speichern dieser Anzahl in dem zweiten Speicherplatz ist vorgesehen, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz, die einer positiven Bewertung entsprechen, und eine negative Schwarm-Bewertung definiert ist als die Anzahl vorherbestimmt definierter Eingaben in den zweiten Speicherplatz, die einer negativen Bewertung entsprechen.

Des Weiteren ist vorzugsweise eine erste Additions-Einrichtung vorgesehen, die die auf dem zweiten Speicherplatz gespeicherten positiven Bewertungen zu einer ersten Zahl aufaddiert, wobei eine zweite Additions-Einrichtung die auf dem zweiten Speicherplatz gespeicherten negativen Bewertungen zu einer zweiten Zahl aufaddiert, und eine erste Divisions-Einrichtung vorgesehen ist, um das Verhältnis aus erster und zweiter Zahl in Form eines Prozentsatzes anzugeben.

Gemäß einer weiteren bevorzugten Ausführungsform dieser erfindungsgemäßen Vorrichtung ist eine Kopier-Einrichtung vorgesehen, die nach Ablauf vorgebbarer Zeitabschnitte sukzessive hintereinander die auf dem zweiten Speicherplatz gespeicherten Bewertungen als nützliche Informationen interpretiert und auf den ersten Speicherplatz überträgt und die diesbezüglichen vorherigen Informationen auf dem ersten Speicherplatz überschreibt.

Des Weiteren kann eine Zeitgeber-Einrichtung vorgesehen sein, die in vorgebbaren konstanten Zeitabschnitten an die erste und zweite Additions-Einrichtung sowie die erste Divisions-Einrichtung und die Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Eine vorherbestimmt definierte Eingabe kann im Falle einer positiven individuellen Bewertung beispielsweise durch Eingabe der arabischen Zahl '+1' realisiert sein, und eine vorherbestimmt definierte Eingabe kann im Falle einer negativen individuellen Bewertung beispielsweise durch Eingabe der arabischen Zahl '-1' realisiert sein.

Des Weiteren ist vorzugsweise jedem der Teilnehmer eine Erstplatzierung einer dualen Einheit mit erstem und zweitem Speicherplatz ermöglicht.

Die erfindungsgemäße Plattform-Vorrichtung wird im Folgenden anhand einer bevorzugten Ausführungsform erläutert, die in der Figur der Zeichnung dargestellt ist. Es zeigt:

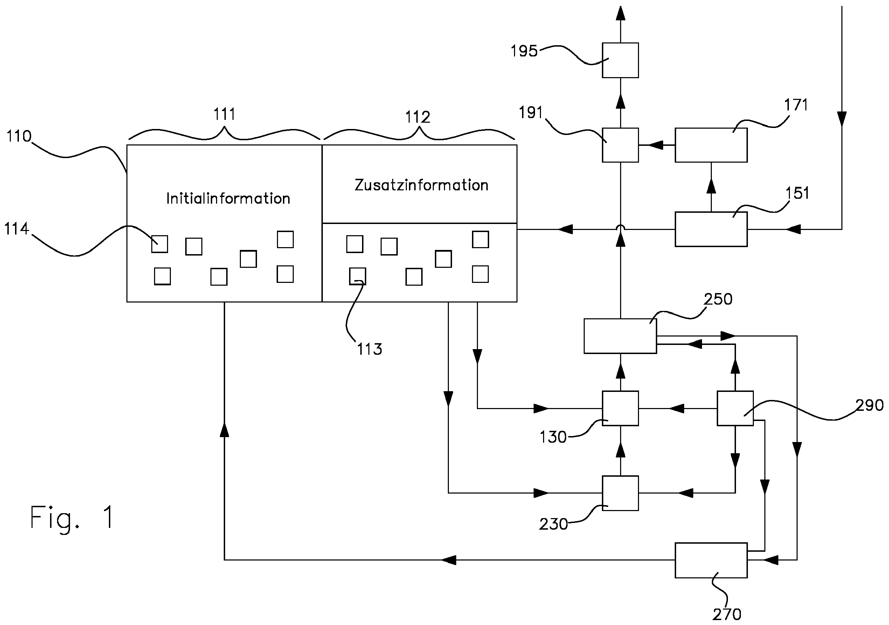

- Fig. 1: eine prinzipielle Ausgestaltung einer dualen Einheit (DuU) entsprechend einer bevorzugten Ausführungsform der Erfindung in Form eines Blockdiagramms.

Die erfindungsgemäße web-platzierte Plattform-Vorrichtung 100 ist mit einer Mehrzahl mittels einer Kennung identifizierbarer Nutzer-Teilnehmer vernetzbar und zum Sammeln und Bearbeiten von auf einer Mehrzahl von jeweils mittels einer vorgebbaren Kodierung identifizierbaren und jeweils einem vorgegebenen Thema zugeordneten Speicherplätzen 110 einer Plattform gespeicherten Informationen seitens der Nutzer-Teilnehmer ausgelegt.

Die in eine Vielzahl unterschiedlicher Themen unterteilten Speicherplätze 110 sind auf der Plattform 100 jeweils von einer dualen Einheit (DuU) gebildet, wobei eine duale Einheit (DuU) jeweils einen einem vorgebbaren Thema zugeordneten und mit seitens eines Initial-Teilnehmers formulierten Initial-Informationen 114 versehenen, seitens eines einzelnen Nutzer-Teilnehmers nicht editierbaren ersten Speicherplatz 111 sowie einen dem ersten Speicherplatz 111 zugeordneten zweiten Speicherplatz 112 umfasst, der seitens eines jeden einzelnen Nutzer-Teilnehmers editierbar ist und für eine Eingabe von Zusatz-Informationen 113 bezüglich der auf dem ersten Speicherplatz 111 gespeicherten Initial-Information 114 seitens der Mehrzahl von Nutzer-Teilnehmern ausgelegt ist.

Dabei ist eine Identifizierungs-Einrichtung 151 vorgesehen, um alle in einen vorgegebenen Speicherplatz 110 Zusatz-Information 113 einbringenden Nutzer-Teilnehmer anhand ihrer Kennung zu identifizieren und in einem Nutzer-Teilnehmer-Register 171 zu speichern, um bei Eingabe einer jeweils neuen Zusatz-Information 113 in den zweiten Speicherplatz 112 seitens eines beliebigen identifizierten Nutzer-Teilnehmers eine die neue Zusatz-Information 113 enthaltende automatisierte Übermittlung (DuU-feed) mindestens eines Teils der betreffenden dualen Einheit an zumindest einen Teil der in dem Nutzer-Teilnehmer-Register 171 gespeicherten anderen registrierten Nutzer-Teilnehmer mittels einer dafür vorgesehenen Sendeeinrichtung 195 vorzunehmen.

In dem editierbaren zweiten Speicherplatz 112 sind Zusatz-Informationen 113 in Form von Bewertungen der auf dem ersten Speicherplatz 111 gespeicherten Informationen seitens der Nutzer-Teilnehmer einschreibbar, wobei eine Bewertung definiert ist als die Menge der von Seiten der Nutzer-Teilnehmer vorgenommener vorherbestimmt definierter Eingaben in den zweiten Speicherplatz 112.

Eine die neue Zusatz-Information 113 enthaltende Übermittlung (DuU-feed) enthält dabei sowohl den Inhalt eines ersten Speicherplatzes 111 als auch den Inhalt des dem ersten Speicherplatz 111 zugeordneten zweiten Speicherplatzes 112.

Die Kennungen der identifizierten Nutzer-Teilnehmer sind geeignet, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden.

Als Kriterien für die Bildung von Untergruppen von Nutzer-Teilnehmern gelten dabei Alter, Geschlecht, regionale Ansiedlung, Häufung vorherbestimmter definierter Webaktivitäten usw. der einzelnen Nutzer-Teilnehmer.

Eine Übermittlung (DuU-feed) an die Kennung eines identifizierten Nutzer-Teilnehmers erfolgt mittels einer durch die Eingabe der jeweils weiteren Zusatz-Information 113 aktivierten Sendeeinrichtung 195 zum Schaffen eines Informations-Links an in dem Nutzer-Teilnehmer-Register gespeicherte andere registrierte Nutzer-Teilnehmer.

In dem editierbaren zweiten Speicherplatz 112 sind Zusatz-Informationen 113 in Form von individuellen Bewertungen der auf dem ersten Speicherplatz 111 gespeicherten Informationen seitens der Nutzer-Teilnehmer einlesbar, wobei mindestens eine Additions-Einrichtung 130 zum Zählen der eingegebenen individuellen Bewertungen sowie ein Speicher in dem zweiten Speicherplatz 112 zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die Anzahl seitens der Nutzer-Teilnehmer vorgenommener vorherbestimmt definierter Eingaben in den zweiten Speicherplatz 112.

Eine erste Additions-Einrichtung 130 ist zum Zählen der eingegebenen positiven individuellen Bewertungen sowie ein Speicher zum Speichern dieser Anzahl in dem zweiten Speicherplatz 112 vorgesehen, und eine zweite Additions-Einrichtung 230 ist zum Zählen der eingegebenen negativen individuellen Bewertungen sowie ein Speicher zum Speichern dieser Anzahl in dem zweiten Speicherplatz 112 vorgesehen, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz 112, die einer positiven Bewertung entsprechen, und eine negative Schwarm-Bewertung definiert ist als die Anzahl vorherbestimmt definierter Eingaben in den zweiten Speicherplatz 112, die einer negativen Bewertung entsprechen.(Quantitative Bewertung)

Die erste Additions-Einrichtung 130 addiert die auf dem zweiten Speicherplatz 112 gespeicherten positiven Bewertungen zu einer ersten Zahl auf, und die zweite Additions-Einrichtung 230 addiert die auf dem zweiten Speicherplatz 112 gespeicherten negativen Bewertungen zu einer zweiten Zahl auf, wobei eine erste Divisions-Einrichtung 250 vorgesehen ist, um das Verhältnis aus erster und zweiter Zahl in Form eines Prozentsatzes anzugeben.

Des Weiteren ist eine Kopier-Einrichtung 270 vorgesehen, die nach Ablauf vorgebbarer Zeitabschnitte sukzessive hintereinander die auf dem zweiten Speicherplatz 112 gespeicherten Bewertungen als nützliche Informationen interpretiert und auf den ersten Speicherplatz 111 überträgt und die diesbezüglichen vorherigen Informationen auf dem ersten Speicherplatz 111 überschreibt.

Eine Zeitgeber-Einrichtung 290 ist vorgesehen, die in vorgebbaren konstanten Zeitabschnitten an die erste 130 und zweite Additions-Einrichtung 230 sowie die erste Divisions-Einrichtung 250 und die Kopier-Einrichtung 270 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Eine vorherbestimmt definierte Eingab ist im Falle einer positiven individuellen Bewertung durch Eingabe der arabischen Zahl '+1' realisierbar, und eine vorherbestimmt definierte Eingabe im Falle einer negativen individuellen Bewertung durch Eingabe der arabischen Zahl '-1' realisierbar.

Jedem der Nutzer-Teilnehmer ist auch eine Erstplatzierung einer dualen Einheit mit erstem 111 und zweitem Speicherplatz 112 als Initial-Teilnehmer ermöglicht.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einer Mehrzahl mittels einer Kennung identifizierbarer Nutzer-Teilnehmer vernetzbare web-platzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, **dadurch gekennzeichnet, dass** die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist, wobei eine Identifizierungs-Einrichtung (151) vorgesehen ist, um alle in einen vorgegebenen Speicherplatz (110) Zusatz-Information (113) einbringenden Nutzer-Teilnehmer anhand ihrer Kennung zu identifizieren und in einem Nutzer-Teilnehmer-Register (171) zu speichern, um bei Eingabe einer jeweils neuen Zusatz-Information (113) in den zweiten Speicherplatz (112) seitens eines beliebigen identifizierten Nutzer-Teilnehmers mittels einer Aktivierungseinheit (191) eine die neue Zusatz-Information (113) enthaltende automatisierte Übermittlung (DuU-feed) mindestens eines Teils der betreffenden dualen Einheit an zumindest einen Teil der in dem Nutzer-Teilnehmer-Register (171) gespeicherten anderen registrierten Nutzer-Teilnehmer mittels einer Sendeeinrichtung (195) vorzunehmen, wobei
- in dem editierbaren zweiten Speicherplatz (112) Zusatz-Informationen (113) in Form von quantitativen Bewertungen der auf dem ersten Speicherplatz (111) gespeicherten Informationen seitens der Nutzer-Teilnehmer einschreibbar sind, wobei eine quantitative Bewertung definiert ist als die Menge der seitens der Nutzer-Teilnehmer vorgenommener vorherbestimmt definierter Eingaben in den zweiten Speicherplatz (112), und
- in dem editierbaren zweiten Speicherplatz (112) Zusatz-Informationen (113) in Form von individuellen Bewertungen der auf dem ersten Speicherplatz (111) gespeicherten Informationen seitens der Nutzer-Teilnehmer vornehmbar sind, wobei mindestens eine Additions-Einrichtung (130) zum Zählen der eingegebenen individuellen Bewertungen sowie ein Speicher in dem zweiten Speicherplatz (112) zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die quantitative Menge (Anzahl) der seitens der Nutzer-Teilnehmer vorgenommener vorherbestimmt definierter Eingaben in den zweiten Speicherplatz (112), wobei
- eine die neue Zusatz-Information (113) enthaltende Übermittlung (DuU-feed) den Inhalt eines ersten Speicherplatzes (111) sowie den Inhalt des dem ersten Speicherplatz (111) zugeordneten zweiten Speicherplatzes (112) umfasst, und wobei
- die Kennungen der identifizierten Nutzer-Teilnehmer geeignet sind, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden.

2. Vorrichtung nach Anspruch 1, **dadurch gekennzeichnet, dass** als Kriterien für die Bildung von Untergruppen von Nutzer-Teilnehmern Alter, Geschlecht, regionale Ansiedlung, Häufung vorherbestimmter definierter Webaktivitäten usw. der einzelnen Nutzer-Teilnehmer vorgesehen sind.

3. Vorrichtung nach einem der vorhergehenden Ansprüche, **dadurch gekennzeichnet, dass** eine Übermittlung (DuU-feed) an die Kennung eines identifizierten Nutzer-Teilnehmers mittels einer durch die Eingabe der jeweils weiteren Zusatz-Information (113) aktivierten Sendeeinrichtung (195) zum Schaffen eines Informations-Links an in dem Nutzer-Teilnehmer-Register (171) gespeicherte andere registrierte Nutzer-Teilnehmer erfolgt.

4. Vorrichtung nach einem der vorhergehenden Ansprüche, **dadurch gekennzeichnet, dass** in dem editierbaren zweiten Speicherplatz (112) Zusatz-Informationen (113) in Form von individuellen Bewertungen der auf dem ersten Speicherplatz (111) gespeicherten Informationen seitens der Nutzer-Teilnehmer einlesbar sind, wobei mindestens eine Additions-Einrichtung (130) zum Zählen der eingegebenen individuellen Bewertungen sowie ein Speicher in dem zweiten Speicherplatz (112) zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die Anzahl seitens der Nutzer-Teilnehmer vorgenommener vorherbestimmt definierter Eingaben in den zweiten Speicherplatz (112).

5. Vorrichtung nach Anspruch 4, **dadurch gekennzeichnet, dass** eine erste Additions-Einrichtung (130) zum Zählen der eingegebenen positiven individuellen Bewertungen sowie ein Speicher zum Speichern dieser Anzahl in dem zweiten Speicherplatz (112) vorgesehen ist, und eine zweite Additions-Einrichtung (230) zum Zählen der eingegebenen negativen individuellen Bewertungen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz (112), die einer positiven Bewertung entsprechen, und eine negative Schwarm-Bewertung definiert ist als die Anzahl vorherbestimmt definierter Eingaben in den zweiten Speicherplatz (112), die einer negativen Bewertung entsprechen.

6. Vorrichtung nach Anspruch 5, **dadurch gekennzeichnet, dass** eine erste Additions-Einrichtung (130) die auf dem zweiten Speicherplatz (112) gespeicherten positiven Bewertungen zu einer ersten Zahl aufaddiert und eine zweite Additions-Einrichtung (230) die auf dem zweiten Speicherplatz (112) gespeicherten negativen Bewertungen zu einer zweiten Zahl aufaddiert, und eine erste Divisions-Einrichtung (250) vorgesehen ist, um das Verhältnis aus erster und zweiter Zahl in Form eines Prozentsatzes anzugeben.

7. Vorrichtung nach Anspruch 6, **dadurch gekennzeichnet, dass** eine Kopier-Einrichtung (270) vorgesehen ist, die nach Ablauf vorgebbarer Zeitabschnitte sukzessive hintereinander die auf dem zweiten Speicherplatz (112) gespeicherten Bewertungen als nützliche Informationen interpretiert und auf den ersten Speicherplatz (111) überträgt und die diesbezüglichen vorherigen Informationen auf dem ersten Speicherplatz (111) überschreibt.

8. Vorrichtung nach den Ansprüchen 6 und 7, **dadurch gekennzeichnet, dass** eine Zeitgeber-Einrichtung (290) vorgesehen ist, die in vorgebbaren konstanten Zeitabschnitten an die erste (130) und zweite Additions-Einrichtung (230) sowie die erste Divisions-Einrichtung (250) und die Kopier-Einrichtung (270) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

9. Vorrichtung nach einem der vorhergehenden Ansprüchen, **dadurch gekennzeichnet, dass** eine vorherbestimmt definierte Eingabe im Falle einer positiven individuellen Bewertung durch Eingabe der arabischen Zahl '+1' realisiert ist.

10. Vorrichtung nach einem der vorhergehenden Ansprüchen, **dadurch gekennzeichnet, dass** eine vorherbestimmt definierte Eingabe im Falle einer negativen individuellen Bewertung durch Eingabe der arabischen Zahl '-1' realisiert ist.

11. Vorrichtung nach einem der vorhergehenden Ansprüchen, **dadurch gekennzeichnet, dass** jedem der Teilnehmer eine Erstplatzierung einer dualen Einheit mit erstem (111) und zweitem Speicherplatz (112) ermöglicht ist.
